# EUROPEAN PATENT APPLICATION

(11) **EP 3 473 820 A1**
(43) Date of publication of application: **24.04.2019**
(21) Application number: 18460032.8
(22) Date of filing: 06.06.2018
(51) Int. Cl.: F01K 7/16, F01K 9/00, F01K 17/02, F22B 3/04, F22G 1/02, F22B 27/00

(54) **METHOD AND INSTALLATION OF COGENERTION IN HEAT PLANTS, ESPECIALLY THOSE EQUIPPED WITH WATER-TUBE BOILERS**

(30) Priority: 20.10.2017 PL 42182117
(71) Applicant: N-ERGIA Sp. z o.o., 44-100 Gilwice (PL)
(72) Inventor: Ostrowski, Piotr, 41-500 Chorzow (PL); Pronobis, Marek, 44-177 Paniowki (PL); Gramatyka, Franciszek, 44-164 Gliwice (PL); Kalisz, Sylwester, 44-121 Gliwice (PL); Wejkowski, Robert, 44-153 Smolnica (PL); Ostrowski, Ziemowit, 44-153 Smolnica (PL); Tunk, Jan, 44-153 Smolnica (PL)

(57) **Abstract**

The method according to the invention characterized in that while maintaining thermal power of the water-tube boiler (1), water stream is decreased in relation to the nominal stream thus water heating increases and then heated water is throttled in the valve (16) to the saturation temperature - the temperature of formation, generating saturated steam, whereby the saturated steam after being overheated in the diaphragm heat exchanger (19), at the boiler flue gas exhaust pass (1), to the temperature above the saturation temperature, feeds steam condensing turbine (20) and a wet steam exiting the turbine (20) after condensation in condenser fed (22) by the return water from the external circuit of distribution (11) and then cooled in the air heaters (24), is then returned by pipeline (12) to external circuit of distribution (11).

Cogeneration installation in heat plants, especially those equipped with water-pipe boilers, in which in the water pipeline behind the boiler on the inlet to the steam and water separator vessel an expansion valve is installed, and the steam and water separator is connected in the lower part with the water drainage pipeline and in the upper part with a saturated steam pipeline, while the steam pipeline connects a series: the diaphragm steam superheater placed in the course of exhaust pass from the boiler, the steam condensing turbine and the condenser, according to the invention is characterized in that has a diaphragm condenser (22) (22-1) connected condensate pipeline (25) to the pump (23) via an air heater (24) and to an intermediate water tank (13) from which the condensate drainage pipeline (12) with a pump (14) connects with the return water pipe from the external circuit of distribution (11), the diaphragm condenser (22-1) is equipped with a cooling circuit consisting of a control valve (9) and a pipeline (10) connected by a flow diaphragm condenser (22-1) with a return water distribution pipe (8).

## Description

The subject of the invention is method and installation of cogeneration in heat plants, especially those equipped with water-tube boilers.

In the combustion process of fuels in the combustion chambers of boilers, flue gases are generated, which by radiation and convection transmit heat to the usable stream of hot water. The recommendations of boiler manufacturers, supported by operating experience shows increase in a boiler water temperature by 80 K, with a feed water temperature of 70°C and boiler's circulation water temperature of 150°C and a water cooling of about 20K in the outer circuit of distribution while maintaining the return water temperature of 50°C and distributing water temperature of 70°C, with a tendency to use lower values (40/60) °C. Additionally as a result of operating experience, the pressure from 1.6MPa to 2.2MPa is applied in the boiler circuit, which corresponds to the water saturation temperature of approx. 201°C to 217°C and the minimum water stream in circulation equal to approx. 80% of the nominal boiler capacity. In thermal technology, a method of water steam production by means of water throttling on a reducing valve (as in EP0838632 A2) and utilization of saturated steam in the process of boiler water deaeration or transformation of saturated steam into superheated steam is known (eg in superheaters - the solution described in JP2007255349 A or solar collectors - WO212127250), which is used to drive work machines.

It has been unexpectedly found that in water boilers with a reduced water stream, it is possible to raise the water temperature, which is the result of energy balance due to the thermal power of the boiler, in order to generate water steam in the isenthalpic throttling process.

The method of cogeneration in heat plants, especially those equipped with water-tube boilers, consists on that while maintaining thermal power of the water-tube boiler, water stream is decreased in relation to the nominal stream thus water heating increases and then heated water is throttled in the valve to the saturation temperature - the temperature of formation, generating saturated steam, whereby the saturated steam after being overheated in the diaphragm heat exchanger, at the boiler flue gas exhaust pass, to the temperature above the saturation temperature, feeds steam condensing turbine and a wet steam exiting the turbine after condensation in condenser fed by the return water from the external circuit of distribution and then cooled in the air heaters, is then returned by pipeline to external circuit of distribution.

Cogeneration installation in heat plants, especially those equipped with water-tube boilers, in which in the water pipeline behind the boiler at the inlet to the steam and water separator vessel an expansion valve is installed, and the steam and water separator is connected in the lower part with the water drainage pipeline and in the upper part with a saturated steam pipeline, while the steam pipeline connects in series: the diaphragm steam superheater placed in the exhaust pass from the boiler, the steam condensing turbine and the condenser, according to the invention is characterized in that has a diaphragm condenser connected with condensate pipeline to the pump via an air heater to an intermediate water tank from which the condensate drainage pipeline with a pump connects with the return water pipeline from the external circuit of distribution, furthermore the diaphragm condenser is equipped with a cooling circuit consisting of a control valve and a pipeline connected by a flow diaphragm condenser with a return water distribution pipeline.

In another solution it has a condenser without a diaphragm connected by a pipeline to a pump of return water with condensate, through an air heater, with a return water pipeline from external circuit of distribution, in addition the condenser is equipped with a cooling circuit consisting of a control valve and a pipeline connected to the condenser without diaphragm.

The invention allows implementation of the cogeneration in boiler houses/heat plants with water boilers, which ensures a significant seasonal flexibility of the heating system and the production of electricity in combination.

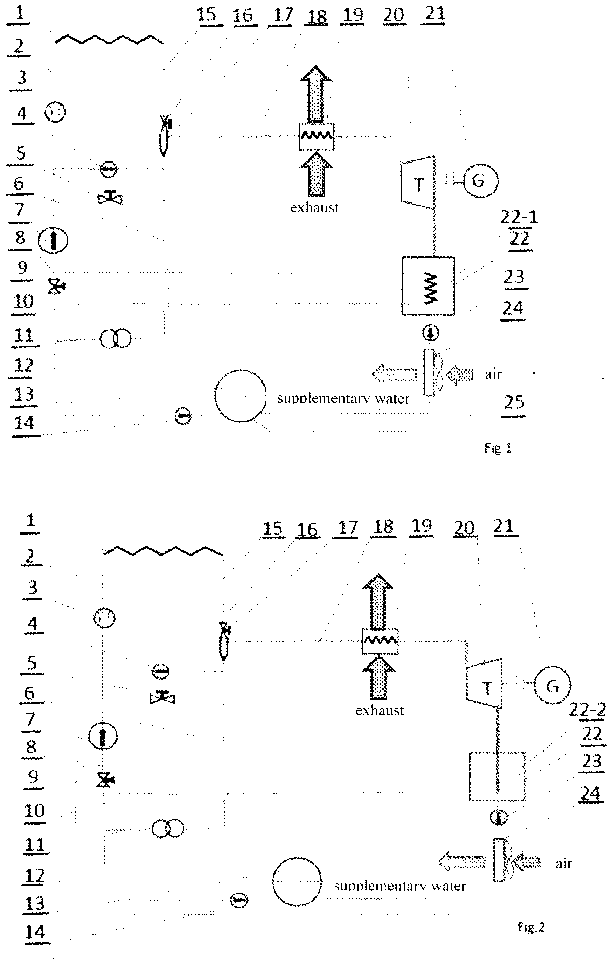

The invention is explained in the accompanying examples in the drawings, which in Fig. 1 shows a schematic view of cooling system in a diaphragm condenser, and in Fig. 2 a system diagram for cooling of wet steam in a condenser without a diaphragm.

The installation is characterized by the fact in that the pipeline 15 behind the boiler 1, an expansion valve 16 is installed at the inlet of the steam and water separating vessel 17, and the steam and water separator 17 is connected in the lower part with the water drainage pipeline 6 and in the upper part with the saturated steam pipeline 18. The steam pipeline 18 connects in series: the diaphragm steam superheater 19 located in the boiler flue gas exhaust pass, the steam condensing turbine 20 and a condenser 22.

In the solution on Fig. 1, the diaphragm condenser 22-1 is connected via a condensate pipeline 25 to the pump 23 via an air heater 24 to an intermediate water tank 13, from which the condensate discharge pipeline 12 with the pump 14 connects to the return water pipeline from the external circuit of distribution 11. The diaphragm condenser 22-1 is equipped with a cooling circuit consisting of a control valve 9 and a pipeline 10 connected by a flow diaphragm condenser 22-1 with a return water distribution pipeline 8.

In another solution Fig. 2, the condenser without diaphragm 22-2 is connected via a pipeline 12 to pump 23 of a return water with condensate via an air heater 24 with a return water pipeline 8 from an external circuit of distribution 11. The condenser without a diaphragm 22-2 is equipped with a cooling circuit consisting of a control valve 9 and a pipeline 10 connected to the condenser without a diaphragm 22-2.

In the district heating water-tube boiler 1, fuel is combusted and the heat generated raises the temperature of the water stream in the boiler by approx. 80 K and feeds the stream control node with cold mixing 5 through the pipeline 15 and further by pipeline 6 external distribution of the water from the pipeline 11, and the circulation in the boiler 1 circuits and external distribution is ensured by the pump 7. Hot premixing 4 ensures stabilization of the boiler water supply temperature by pipeline 2 while maintaining a quasi-constant flow of water feed in the boiler 1 measured with a flow meter 3. While maintaining thermal power of the boiler 1, after decreasing the stream in the boiler water circuit 1 in relation to the nominal stream, the temperature in the boiler 1 increases proportionally. Heated water after isenthalpic throttling in the valve 16, reduces the saturation pressure/ temperature to the temperature of formation and generates the saturated steam, which after overheating in flue gases exhaust stream in the diaphragm superheater 19, is supplied to the turbine set consisting of the condensing turbine 20 and the electric current generator 21 in the cogeneration installation. The wet steam exiting the turbine 20 condenses is cooled with the return water from the external circuit of distribution 11 of the 22-1 in condenser 22 with diaphragm 22-1 or without a diaphragm 22-2. The condensate, after another cooling in the air heaters 24 of combustion air, returns to the return water pipeline from the external circuit of distribution 11.

## Claims

1. Method of cogeneration in heat plants, especially those equipped with water-pipeline boilers according to the invention **characterized in that** while maintaining thermal power of the water-tube boiler (1), water stream is decreased in relation to the nominal stream thus water heating increases and then heated water is throttled in the valve (16) to the saturation temperature - the temperature of formation, generating saturated steam, whereby the saturated steam after being overheated in the diaphragm heat exchanger (19), at the boiler flue gas exhaust pass (1), to the temperature above the saturation temperature, feeds steam condensing turbine (20) and a wet steam exiting the turbine (20) after condensation in condenser fed (22) by the return water from the external circuit of distribution (11) and then cooled in the air heaters (24), is then returned by pipeline (12) to external circuit of distribution (11).

2. Cogeneration installation in heat plants, especially those equipped with water-pipe boilers, in which in the water pipeline behind the boiler on the inlet to the steam and water separator vessel an expansion valve is installed, and the steam and water separator is connected in the lower part with the water drainage pipeline and in the upper part with a saturated steam pipeline, while the steam pipeline connects a series: the diaphragm steam superheater placed in the course of exhaust pass from the boiler, the steam condensing turbine and the condenser, according to the invention **is characterized in that** has a diaphragm condenser (22) (22-1) connected condensate pipeline (25) to the pump (23) via an air heater (24) to an intermediate water tank (13) from which the condensate drainage pipeline (12) with a pump (14) connects with the return water pipe from the external circuit of distribution (11), the diaphragm condenser (22-1) is equipped with a cooling circuit consisting of a control valve (9) and a pipeline (10) connected by a flow diaphragm condenser (22-1) with a return water distribution pipe (8).

3. Installation according to claim 2, **characterized in that** it has a condenser (22) without a diaphragm (22-2) connected by a pipeline (12) to a pump (23) of return water with condensate, through an air heater (24), with a return water pipeline (8) from external circuit of distribution, in addition the condenser (22-2) is equipped with a cooling circuit consisting of a control valve (9) and a pipeline (10) connected to the condenser without diaphragm (22-2)
